# EUROPÄISCHE PATENTSCHRIFT

(11) **EP 0 877 127 B1**
(45) Veröffentlichungstag und Bekanntmachung des Hinweises auf die Patenterteilung: **27.08.2003**
(21) Anmeldenummer: 97810840.5
(22) Anmeldetag: 10.11.1997
(51) Int. Cl.: E04D 13/16, E04D 3/36

(54) **Kernbohrer zur Herstellung einer Verbindung zwischen der Dachhaut und Tragkonstruktion durch eine Wärmedämmung hindurch**
Hole cutter for connecting a roof covering to the roof structure through a thermal insulation
Trépan pour la réalisation d'une liaison entre la couverture et la charpente d'une toiture à travers un isolant thermique

(30) Priorität: 09.05.1997 CH 109997
(43) Veröffentlichungstag der Anmeldung: 11.11.1998
(73) Patentinhaber: Casutt, Reinhard, 7472 Surava (CH)
(72) Erfinder: Casutt, Reinhard, 7472 Surava (CH)
(74) Vertreter: Riederer, Conrad A., Dr.

(56) Entgegenhaltungen:
- EP-A- 0 222 284
- EP-A- 0 517 667
- US-A- 1 705 049
- US-A- 2 444 099
- US-A- 2 923 180
- US-A- 3 849 019

## Beschreibung

Die vorliegende Erfindung betrifft einen Kernbohrer mit einer Schneid- oder Sägekante an einem zylindrischen Bohrgehäuse.

Bei geneigten Dächern ist beispielsweise durch eine Schalung auf Sparren eine Verlegeunterlage gebildet, darauf ist meist eine Dampfdichtung angeordnet und darüber die Wärmedämmschicht verlegt. Über der Wärmedämmschicht ist eine vorzugsweise hinterlüftete Dachhaut angeordnet. Die Dampfdichtung auf der Warmseite der Wärmedämmung schützt die Wärmedämmung raumseitig vor dem Eindringen von Wasserdampf und dadurch vor Kondenswasserbildung in der Dämmschicht. Auf der Kaltseite der Wärmedämmung ist in der Regel ein wasserdichtes geschupptes oder fugenloses Unterdach ausgebildet, um die Wärmedämmung vor Nässe von Aussen zu schützen. Das Dach kann in bekannter Weise z.B. als Warmdach mit auf der Dämmschicht aufliegenden Unterdach-Bahnen oder - Platten oder als Kaltdach mit einer Lüftungsebene über und einer Lüftungsebene unter dem auf einer Lattung oder Schalung vorliegenden Unterdach ausgebildet sein. Aus technischen Gründen wird heute sehr oft ein wasserdichtes und dampfdiffusionsoffenes Unterdach direkt auf die Dämmschicht aufgelegt und allenfalls verschweisst oder verklebt. Dadurch kann jedoch lediglich eine gegenüber dem Kaltdach geringere Austrocknung von in der Dämmschicht vorhandener oder entstehender Feuchtigkeit stattfinden, wobei der Austrocknungsprozess entsprechend länger dauert. Daher muss die Dampfdichtung entsprechend zuverlässig und dicht ausgeführt sein.

Lasten, z.B. Windkräfte und Kräfte aus Eigenlast der Dachhaut und Schneelast, müssen durch die Wärmedämmung hindurch auf die Tragkonstruktion, d.h. die Schalung und/oder die Sparren, abgetragen werden können. Dazu kann entweder die Wärmedämmung genügend druckfest ausgebildet sein, oder es müssen die Wärmedämmschicht durchquerende, Kraft übertragende Mittel vorgesehen sein. Wärmedämmungen, z.B. Mineralfaserplatten, können jedoch oft Kräfte, insbesondere im Steildach auftretende Schub- und Druckkräfte, praktisch nicht oder nur ungenügend übertragen. Im Stand der Technik sind deshalb verschiedene Lösungen vorgeschlagen, die Kräfte über die Dämmschicht durchquerende Mittel auf die Unterkonstruktion abzutragen.

Traditionell werden Latten, z.B. zwei kreuzweise verlegte Holzlattungen, in der Wärmedämmschicht angeordnet, um die Dachlasten aufzunehmen und auf die Tragkonstruktion zu übertragen. Damit diese Ausführung jedoch einwandfrei ist, dürfen die eingebauten Holzlatten, welche nicht an einen Durchlüftungsraum angrenzen, maximal eine Feuchtigkeit von 16 Masseprozenten aufweisen. Diese Anforderung kann aber in der Regel nur mittels technischer Trocknung des Holzes erreicht werden. Da diese Holzeinlagen relativ voluminös sind, ist dies arbeitsaufwendig und teuer. Zudem verschlechtern die Holzeinlagen und die vielen Stösse den k-Wert der Dämmschicht.

In der europäischen Patentschrift 0 448 915 wird vorgeschlagen, als Träger zwischen Konterlattung und Tragkonstruktion Schrauben zu verwenden, welche im vorderen und im hinteren Teil des Schaftes je ein Gewinde aufweisen. Dadurch können die Schrauben Druckkräfte von der Lattung aufnehmen. Die Schrauben werden in zwei entgegengesetzten Winkeln durch die Konterlatte und die Wärmedämmung in den Sparren geschraubt. So wirken Sparren und Konterlattung zusammen mit den Schrauben wie ein Fachwerkträger, über welchen sowohl Druckkräfte als auch Schubkräfte abtragbar sind. Bei dieser Konstruktion ist es jedoch schwierig, die Konterlatten an jeder Befestigungsstelle in konstantem Abstand zur Tragkonstruktion zu befestigen. Um eine ebene Konterlattung zu erreichen ist ein sorgfältiges, arbeitsaufwendiges Ausrichten der Latten, z.B. mit Richtschnüren, erforderlich.

Weiter sind auch U-förmige Stahlbügel bekannt, welche mit dem Boden nach oben kopfvoran durch die Dämmschicht geschlagen werden. Über den mit der Dämmschicht bündigen Boden wird die Unterdachbahn verlegt. Die Konterlatten werden durch die Unterdachbahn und durch ein Loch im Boden des Bügels mittels Schrauben mit dem Sparren verschraubt. Der Bügel übernimmt indes die statischen Tragfunktionen. Diese Bügel sind in der Praxis schwierig in die Dämmung einzubringen, da ein grosser Kraftaufwand dazu erforderlich ist und die Dämmschicht die Schläge auf die Bügel abfedert. Dazu können Beschädigungen der Dampfdichtung entstehen, welche nicht bemerkt werden, da sie im Verborgenen geschehen. Auch ist beim Verschrauben der Konterlattung das Loch im Boden des Bügels schwierig zu treffen, weshalb dabei mit den Schrauben oft die Unterdachbahn beschädigt wird.

Schliesslich sind Kunststoffbecher bekannt, welche am Becherrand eine Zahnung und zentrisch eine Holzschraube mit Hohlschaft aufweisen. Mittels einer Spezialbohrmaschine werden diese auf die Dämmschichtstärke abgestimmten Becher in die Isolationsschicht gebohrt, wobei gleichzeitig eine im Becher integrierte Holzschraube in die Tragkonstruktion geschraubt wird. Die Dämmung im Bohrkernbereich wird in den Becher gepresst. Ein mit einem Spannstift ausgerüstetes Sperrholzbrettchen wird nach dem Verlegen der Unterdachbahn durch diese hindurch mit dem Becher verbunden, indem der Spannstift in den Hohlschaft der Schraube getrieben wird. In dieses Sperrholzbrettchen wird nun die Konterlattung verschraubt. Neben den becherförmigen Spritzgussteilen mit den darin integrierten Spezialschrauben und den Sperrholzbrettchen mit Spannstift wird auch eine spezielle Bohrmaschine benötigt. Diese Lösung ist deshalb teuer und zudem ist eine Beschädigung der Dampfdichtung durch das Einbohren der Becher nicht ausgeschlossen. Eine solche Beschädigung bleibt jedoch bis zum Auftreten von Folgeschäden verborgen, da die Berührungspunkte der Becher mit der Dampfsperre nicht sichtbar sind.

Aus dem Stand der Technik gemäss der EP 0 222 284 ist ein Zylinderkopfbohrer bekannt, in dessen Schaft anstelle einer Zentrierspitze eine Kopfschraube in den Schaft geschraubt ist. Der Kopf der Kopfschraube bildet einen über die Vorschneiden und Stirnschneiden des Zylinderkopfbohrers vorstehenden Anschlag. Ein solcher Anschlag kann im Kunstschaumstoff einer Isolierplatte vordringen, bis er nahezu an die unter der Isolierplatte angeordnete Dampfsperre stösst, welche von einer nicht nachgebenden Schalung getragen ist. Sobald der Anschlag nicht mehr weiter vordringen kann, drehen die Schneiden leer und es bleibt ein dünner Lochboden in der Isolierplatte. Obwohl der Bohrer mit einer freihändig zu benutzenden Bohrmaschine verwendet werden kann, wird vorgeschlagen, ein Bohrgestell zu benützen, das auf die Isolierplatte zu stellen ist. Im Bohrgestell ist die Antriebsvorrichtung für den Bohrer axial verschiebbar gelagert und kann gegen Federkraft vorgeschoben werden.

Aus der US-A-2,444,099 ist eine Lochsäge bekannt, deren Zähne in einer besonderen Art ausgebildet sind, damit ein ausgesägter Kern sich nicht in der Lochsäge verkeilt und daher leicht entfernt werden kann. Ein Ausführungsbeispiel einer solchen Lochsäge weist einen axialen Schaft auf, dessen vorderes, weit über den Sägerand vorstehendes Ende gerundet ist. Dieser Schaft dient dazu, in ein vorgebohrtes Loch gesteckt die Lochsäge präzise zu führen.

Aus der US-A-1,705,049 ist ein Bohrgerät bekannt, welches ein Schaftteil aufweist, das axial eine durchgehende Bohrung aufweist. Dieses Schaftteil ist gegen ein Ende verjüngt und am anderen Ende mit einem äusseren Gewinde versehen. Ein auf dieses Gewinde aufgeschraubter Rohrkörper weist an beiden Enden ein Innengewinde auf. Ein kreisrunder Anschlagblock mit einer mittig angeordneten, umlaufenden Rippe zwischen zwei Gewindeabschnitten besitzt eine axiale Bohrung und ist in den Rohrkörper eingeschraubt. Eine rohrförmige Schneide besitzt ein Gewinde, mit dem sie auf den Anschlagblock aufgeschraubt ist, und gegenüber dem Gewinde einen Zahnkranz. Der Zahnkranz weist am schneidenden Ende einen vergrösserten Durchmesser auf. Durch die axiale Bohrung im Schaftteil und durch die axiale Bohrung im Anschlagblock ist ein Zentrierstab geführt. Diese ist darin geleitend gelagert. Eine Spiralfeder presst den Zentrierstab in Richtung der Zähne des Zahnkranzes. Der Zentrierstab ist zugespitzt. Die Spitze findet Halt in der Oberfläche des zu bohrenden Materials. Der Zentrierstab hält dadurch das Bohrgerät in seiner Bohrstellung. Er kann auch benutzt werden, um ein mit dem Bohrgerät ausgeschnittenes Teil aus dem Innern des Bohrgeräts hinauszudrücken. Ausserhalb des Rohrkörpers ist ein Ring angeordnet. Der Ring ist am Rohrkörper oder an der rohrförmigen Schneide in einer wählbaren Distanz zum Zahnkranz feststellbar. Mit dem Ring ist die Einbohrtiefe beschränkbar.

Es ist Aufgabe der Erfindung eine Vorrichtung der erwähnten Gattungen zu schaffen, mit der ein einwandfreier Dachaufbau kostengünstig und mit wenig Arbeitsaufwand erstellt werden kann. Dabei soll insbesondere die Dampfdichtung nicht verletzt werden. Trotzdem auftretende Verletzungen sollen sofort erkannt und behoben werden können. Die Dämmfähigkeit der Dämmstoffschicht soll möglichst wenig beeinträchtigt werden.

Bei der Herstellung einer lokalen, Druck- und Schubkräfte übertragenden Verbindung zwischen einer Tragkonstruktion mit darüberliegender Wärmedämmschicht und einer darüber angeordneten Lattung oder Dachhaut werden an den Verbindungsstellen die Dämmschicht mit Kernbohrungen versehen, auf den Durchmesser der Bohrungen abgestimmte, Kraft übertragfähige Distanzteile konzentrisch mit den Bohrungen in der Dämmschicht angeordnet und über den Distanzteilen die Lattung oder Dachhaut befestigt.

Die Kernbohrungen in der Dämmschicht werden vorteilhaft mit einem auf den Durchmesser der Distanzteile abgestimmten, vielfach verwendbaren Kernbohrer ausgeführt, die Bohrkerne aus der Dämmschicht entfernt und Distanzteile in die Bohrlöcher eingesetzt. Nach dem Entfernen der Bohrkerne liegt die unterste, von der Bohrung nicht berührte und daher nicht verletzte Schicht der Dämmung oder eine zwischen Dampfdichtung und Wärmedämmung eingebrachte Schalldämmeinlage vor Augen. Daher kann festgestellt werden, dass die Dampfdichtung nicht berührt wurde. Falls die Dampfdichtung offen vor Augen liegt, kann eine allfällige Verletzung der Dampfdichtung sofort festgestellt und behoben werden.

Die Distanzteile können an der Tragkonstruktion und die Dachhaut an den Distanzteilen befestigt werden. Vorteilhaft wird jedoch die Lattung oder Dachhaut durch die Distanzteile hindurch mit der Tragkonstruktion verschraubt. Dadurch muss jede Befestigungsstelle nur einmal verschraubt werden.

Vorteilhaft wird die Kernbohrung lediglich bis nahe an die Dampfbremse ausgeführt, damit diese durch die Bohrung nicht gefährdet wird. Dünne Schichten von verbleibendem Dämmmaterial stören die Stabilität des Aufbaus keineswegs.

Dazu wird die maximale Annäherung einer Schneid- oder Sägekante eines Kernbohrers an die Dampfdichtung durch ein über die Schneid- oder Sägekante vorstehendes, abgerundetes stabförmiges Führungsteil am Bohrkopf, begrenzt. Dadurch ist ein Verletzen der Dampfdichtung weitgehend verhindert, weil die Schneidkante die Dampfdichtung bei senkrechter Bohrrichtung nicht erreichen kann.

Ein solches stabförmiges Führungsteil kann jedoch, insbesondere wenn unter der Dampfdichtung ein Hohlraum oder eine nachgebende Unterlage ist, die Dampfdichtung zurückstossen, wodurch eine Verletzung der Dampfdichtung durch die Schneide- oder Sägekante eintreten kann. Deshalb wird vorteilhaft die maximale Bohrtiefe des Kernbohrkopfes durch Verstellen einer Fläche, z.B. der weiter unten erwähnten Schiebefläche, und/oder eines Rings am Bohrkopf eingestellt, welche Fläche und/oder welcher Ring als Begrenzungsmittel gegen die Dämmschicht drückt, sobald die Schneidkante genügend in das Dämmmaterial eingedrungen ist. Dadurch ist eine Sichtkontrolle der erreichten Bohrtiefe möglich.

Schräge Bohrungen bewirken eine schlechte Einpassung des Distanzteils in die Dämmschicht. Zudem besteht bei schrägem Bohren die Gefahr, dass die Schneidkante die Dampfsperre verletzt. Vorteilhaft wird deshalb die senkrechte Richtung der Bohrung zur Dachfläche anhand eines am Bohrkopf verschiebbar gelagerten Ringes kontrolliert. Der Ring verschiebt sich durch die Schwerkraft nach unten. Bei senkrechter Ausrichtung des Bohrkopfes zur Dämmschicht liegt der Ring gleichmässig auf der Dämmschicht auf. Dadurch ist die Ausrichtung des Bohrkopfes zur Dämmschicht jederzeit kontrollierbar.

Erfindungsgemäß werden im Kernbohrer verbleibende Bohrkerne mit einer verschieblich gelagerten Ausstossvorrichtung aus dem Bohrkopf nach vorne ausgestossen, um den Kernbohrer für eine weitere Bohrung zu entleeren.

Vorteilhaft werden zur Befestigung von Holzteilen der Dachhaut an der Tragkonstruktion Schrauben mit einem Sechskantschraubenkopf verwendet und diese Schraubenköpfe mittels eines als Fräskopf ausgebildeten Schrauberkopfes eingeschraubt und im Holz versenkt. Dadurch können kostengünstige Schrauben verwendet und trotzdem eine Oberfläche ohne vorspringende Schraubenköpfe erreicht werden. Schrauben können im Gegensatz zu Nägeln zudem jederzeit wieder leicht ausgedreht werden.

Vorteilhaft wird über der Dampfdichtung eine Schalldämmmatte angeordnet. Neben den Schalldämmeigenschaften bietet diese für die Dampfdichtung einen Schutz vor Verletzungen während der Bauarbeiten.

Bei einem erfindungsgemässen Kernbohrer mit einer Schneid- oder Sägekante an einem zylindrischen Bohrgehäuse und einem axial darin angeordneten, die Schneid- oder Sägekante überstehenden, stabförmigen Führungsteil zur Ausführung einer Kernbohrung in eine Wärmedämmschicht, insbesondere auf einem Steildach, weist der stabförmige Führungsteil ein stumpfes, abgerundetes Ende auf. Dieses kann zwar leicht durch das weiche Dämmmaterial hindurch gestossen werden, verletzt aber die Dampfsperre bei einer Berührung nicht. Durch das über die Schneidkante vorspringende, gerundete Ende des Führungsteils wird die maximale Annäherung der Schneide- oder Sägekante an die empfindliche Dampfdichtung begrenzt.

Erfindungsgemäss ist zudem am stabförmigen Führungsteil eine Schiebefläche translatorisch beweglich angeordnet, um damit im Bohrgehäuse verbleibende Bohrkerne ausschieben zu können.

Zweckmässigerweise ist das antriebseitige Ende des stabförmigen Führungsteils als Schaft zum Einspannen in ein Bohrfutter einer Bohrmaschine ausbildet.

Vorteilhaft ist ein Schiebekranz oder Ring ausserhalb des Bohrgehäuses angeordnet, welcher, z.B. auf dem stabförmigen Führungsteil, translatorisch beweglich gelagert ist, um die senkrechte Ausrichtung des Bohrgehäuses in Bezug auf die Dämmschicht kontrollieren zu können und welcher, falls mit der Schiebefläche verbunden, dazu dient, dass mit dem Ring die Schiebefläche verschoben werden kann.

Vorteilhaft ist, z.B. auf dem stabförmigen Führungsteil, wenigstens ein verstellbarer Anschlag zur Begrenzung des Verschiebebereiches des Schiebekranzes, bzw. der Schiebefläche angeordnet. Dadurch kann die maximale Einbohrtiefe relativ zur Dämmschichtoberfläche begrenzt werden.

Zweckmässigerweise bilden Schiebekranz und Schiebefläche zusammen eine Einheit. Mit dieser lassen sich Bohrkerne aus dem Bohrgehäuse ausschieben, die Einbohrtiefe bezüglich Dämmschichtoberfläche begrenzen und die Senkrechte Ausrichtung des Bohrgehäuses zur Dämmschicht kontrollieren.

Vorteilhaft ist dazu der zur Dämmschicht gerichtete Rand des Schiebekranzes auf der selben Ebene angeordnet wie die zur Dämmschicht gerichtete Schiebefläche. Dadurch liegt der Schiebekranz während des Bohrens auf der Dämmschicht auf, wodurch eine Abweichung von der senkrechten Bohrrichtung sofort sichtbar wird.

Nachfolgend werden Ausführungsbeispiele der Erfindung unter Bezugnahme auf die Figuren beschrieben. Es zeigt:
- Fig. 1: einen Schnitt durch einen Dachaufbau gemäss dem Stand der Technik,
- Fig. 2: einen Schnitt durch einen Dachaufbau, hergestellt nach dem erfindungsgemässen Verfahren,
- Fig. 3: eine Aufsicht auf den Dachaufbau nach Figur 2.
- Fig. 4: eine Seitenansicht des erfindungsgemässen Kernbohrers,
- Fig. 5: einen Schnitt entlang der Achse des Kernbohrers,
- Fig. 6: einen Schnitt quer zur Achse des Kernbohrers,

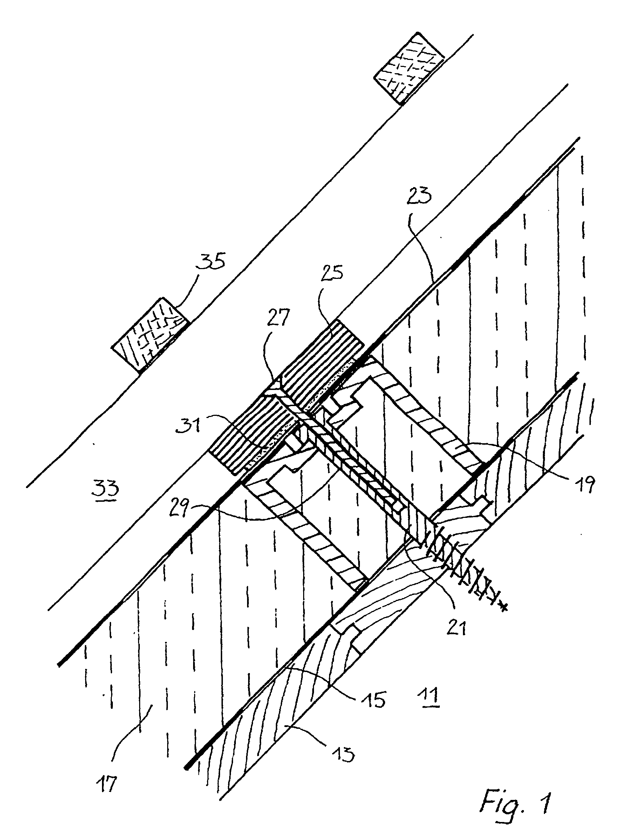

In Figur 1 ist der eingangs erwähnte Stand der Technik dargestellt. Auf einem Sparren 11 ist eine Schalung 13, darauf eine Dampfdichtung 15 und darüber eine Dämmschicht 17 angeordnet. In diese Dämmschicht 17 wird mit einer Spezialbohrmachine ein becherförmiges Distanzteil 19 eingebohrt, dazu ist dieses am Becherrand mit einer Zahnung versehen, welche sich durch die Dämmschicht 17 gräbt. Im Kunststoffbecher 19 ist eine spezielle Schraube 21 integriert. Diese wird gleichzeitig mit dem Einbohren des Bechers 19 in die Tragkonstruktion 11,13 eingeschraubt. Dazu ist ein spezieller Schraubkopf an der Bohrmaschine notwendig, welcher erlaubt, dass der Becher 19 nach Erreichen des harten Untergrunds 15,13 stillstehen und die Schraube 21 trotzdem weiter angezogen werden kann.

Über dieses befestigte Distanzteil und die Dämmschicht wird nun eine Unterdachbahn 23 ausgebreitet und mit den Sperrholzbrettchen 25 befestigt. Dazu dient ein Spannstift 27, welcher durch die Unterdachbahn 23 hindurch in den Hohlschaft 29 der Schraube 21 gesteckt wird. Zwischen Sperrholzbrettchen 25 und Unterdachbahn 23 ist eine Nageldichtung 31 angeordnet. Eine Konterlattung 33 wird dann an den Sperrholzbrettchen 25 befestigt und darauf eine Lattung 35 angebracht.

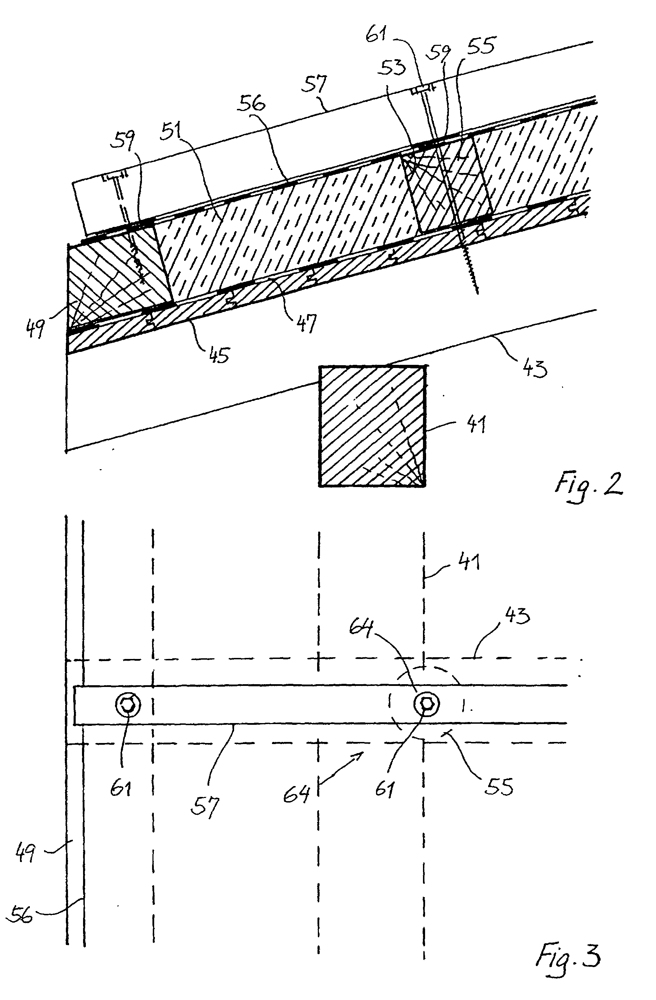

In Figur 2 ist ein Beispiel eines erfindungsgemässen Dachaufbaus dargestellt. Ein Dachstuhl ist aus horizontalen Pfetten 41 und geneigten Sparren 43 errichtet. Darauf ist eine Schalung 45 angebracht, welche als Verlegeunterlage dient. Auf dieser Schalung 45 ist eine Dampfdichtung 47 angeordnet. Zwischen Traufbalken 49 und First ist die Wärmedämmung 51 vollflächig verlegt. In diese Dämmschicht 51 sind mit einem Kernbohrer, welcher weiter unten beschrieben ist, Bohrungen 53 ausgeführt worden. Die Bohrkerne wurden entfernt und in die Bohrungen 53 sind Distanzteile 55 eingesetzt worden. Die Distanzteile 55 können beispielsweise aus Holz oder Holzwerkstoffen gebildet sein. Sie sind zylindrisch und füllen die Bohrung 53 satt aus. Ihre Länge entspricht der Stärke der Dämmschicht 51. Über die Dämmschicht 51 und die Distanzteile 55 ist eine Unterdachbahn 56 verlegt. Darüber sind die Konterlatten 57 angeordnet und durch Nageldichtungen 59 hindurch mittels Schrauben 61 mit der Tragkonstruktion 43,45 verschraubt. Es ist auch möglich, anstatt einer auf der Dämmschicht aufliegenden Unterdachbahn 56 ein Unterdach, z.B. aus harten Holzfaserplatten, über den Konterlatten 57 anzubringen. Auf die Konterlatten 57 können weiter Dachlatten und Ziegel oder eine andere Eindeckung angebracht werden.

In der Figur 3 ist ein Dachausschnitt mit dem bezüglich Figur 2 beschriebenen Aufbau in einer Aufsicht dargestellt. Gestrichelt sind darin die Pfette 41 und die Sparren 43 eingezeichnet. Der Traufbalken 49 ist teilweise überdeckt durch die Unterdachbahn 56, unter welche auch die Distanzteile 55 zu liegen kommen. Sichtbar sind insbesondere die Konterlatten 57. Um die Befestigungsstellen 64 zu bestimmen, wird z.B. mit einer Hilfslatte an den Sparren 43 Mass genommen, und dieses Mass auf die Dämmschicht 51 übertragen, um danach mittels einer Spickschnur die Sparren 43 auf der Dämmschicht 51 anzuzeichnen. Quer zu den Sparren 43 werden ebenfalls mit der Spickschnur Querlinien gezogen, und danach in den Kreuzungspunkten die Bohrungen vorgenommen. Die Abstände der Querlinien werden errechnet und eingemessen.

Nach dem Verlegen der Unterdachbahn 56 können die Distanzteile leicht ertastet werden oder sind sogar durch die Unterdachbahn 56 hindurch sichtbar. Die Nageldichtungen 59 können deshalb ohne weiteres über den Distanzteilen auf die Unterdachbahn 56 angebracht werden. Auf diese werden dann die Konterlatten 57 gesetzt und durch die Distanzteile 55 hindurch mit den Sparren 43 verschraubt. Dazu werden Schrauben 61 mit Sechskantkopf verwendet, welche mit einer Sechskantnuss mit Zahnung eingeschraubt werden. Durch die Zahnung wird beim Einschrauben der Schraube 61 das Holz der Konterlatte um den Schraubenkopf herum weggefräst, so dass der Schraubenkopf, unter Verdrängung des Holzes unter dem Schraubenkopf, in der Konterlatte 57 versenkt wird.

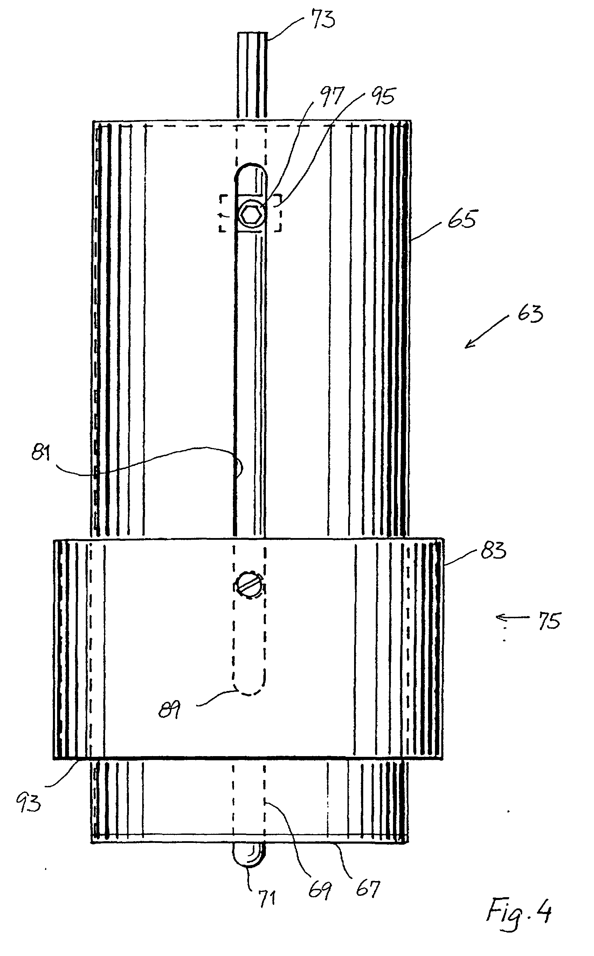

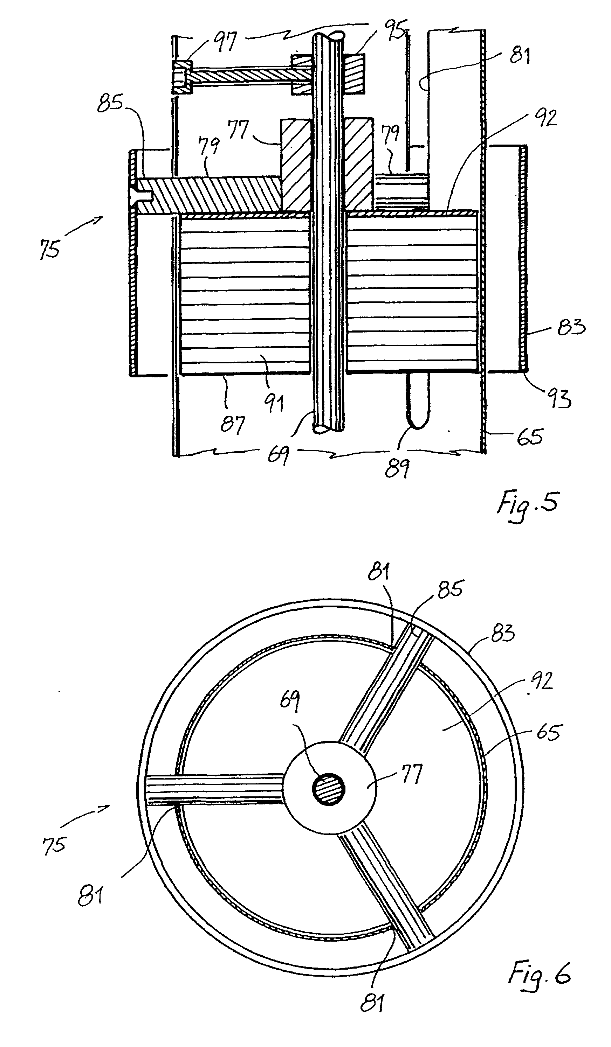

Der in den Figuren 4 bis 6 dargestellte Kernbohrer 63 wurde speziell zum Ausbohren oder Ausschneiden der Dämmschicht 51 an den Befestigungspunkten entwickelt. Er besteht im Wesentlichen aus einem zylindrischen Bohrgehäuse 65, dessen Vorderkante 67 die Dämmschicht 51 zu schneiden oder zu sägen vermag. Im Zentrum dieses Gehäuses 65 ist ein Führungsteil oder Führungsstab 69 angeordnet. Der Führungsstab 69 übersteht die Vorderkante 67 des Bohrgehäuses 65 um den Betrag, um welchen die schneidende oder sägende Vorderkante 67 von der Dampfdichtung 47 entfernt bleiben soll. Das überstehende Ende 71 ist gerundet, um die Dampfdichtung 47 nicht verletzen zu können. Das hintere Ende 73 des Führungsstabes 69 ist zweckmässigerweise so ausgebildet, dass es in das Futter einer Bohrmaschine oder eines Schraubers einspannbar ist.

Der Führungsstab 69 dient auch als Achse für einen darauf verschiebbar gelagerten Schieber 75. Der Schieber 75 sitzt mit einem Gleitlager 77 auf dem Führungsstab 69. Vom Gleitlager 77 aus erstrecken sich radial drei Arme 79. Diese Arme 79 sind durch Führungs- oder Schlitzöffnungen 81 im Bohrergehäuse 65 hindurchgeführt. Ausserhalb des Bohrergehäuses 65 ist ein das Bohrergehäuse 65 senkrecht zum Führungsstab 69 umlaufender Schiebegriffkranz oder Ring 83 auf die Enden 85 der Arme 79 geschraubt. Auf der vom Antrieb abgewandten Seite der Arme 79 ist eine Schiebefläche 87 angeordnet. Die dämmschichtseitig wirksame Schiebefläche 87 ist mit Vorteil in einem Abstand zu den Armen 79 angeordnet, welcher wenigstens dem Abstand des untersten Randes 89 der Schlitzoffnung 81 von der Schneid- oder Sägekante 67 des Bohrgehauses 65 entspricht. Dadurch kann mit der Schiebefläche 87 ein Bohrkern bis über diese Schneidkante 67 aus dem Bohrgehäuse hinausgestossen werden. Zu diesem Zweck ist im Beispiel ein Holzklotz 91 auf eine auf den Armen 79 aufliegende Schiebeplatte 92 montiert. Ebenso kann jedoch eine dünne Schiebeplatte in entsprechendem Abstand zu den Armen 79 montiert sein. Vorteilhaft liegt der untere Rand 93 des Ringes 83 in der selben Ebene wie die Schiebefläche 87. Dadurch liegt der am Führungsstab verschiebliche Schieber 75 während dem Bohren mit der Schiebefläche 87 auf der Dämmung 51 auf. Auf der Antriebseite des Schiebers 75 ist auf dem Führungsstab 69 ein stufenlos verstellbarer und feststellbarer Tiefenanschlag 95 vorgesehen, mit welchem die Einbohrtiefe gegenüber der Dämmschichtoberfläche begrenzt werden kann.

Dieser Schieber 75 hat verschiedene Funktionen: Zum Einen dient er dazu, mit einer Schiebefläche 87 die nach einer Bohrung im Bohrgehäuse 65 verbleibenden Bohrkerne auszustossen, zum Andern mit Schiebefläche 87 und Ring 83 in Zusammenhang mit dem Tiefenanschlag 95 die Einbohrtiefe zu begrenzen und zudem, durch das Aufliegen des Schiebegriffkranzes oder Ringes 83 auf der Dämmschicht, den senkrechten Bohrwinkel anzuzeigen.

Anhand einer nicht eingezeichneten Skala auf dem Bohrgehäuse 65 oder auf dem Führungsstab 69 kann die maximale Einbohrtiefe eingestellt werden. Diese Skala ist vorteilhaft so gelegt, dass der Abstand zwischen vorderem Ende 71 des Führungsstabes 69 und dem dämmschichtseitigen Rand des Ringes 83 bzw. der Schiebefläche 87 dem eingestellten Wert entspricht. Der Tiefenanschlag 95 weist eine Feststellschraube 97 auf. Die Feststellschraube 97 ist zweckmässigerweise eine Imbusschraube. Ihr Kopf liegt vorteilhaft in der Schlitzöffnung 81 und springt in angezogenem Zustand nicht über das Bohrgehäuse 65 vor.

Der Führungsstab 69 kann fest oder gegenüber dem Bohrgehäuse verschieblich an diesem befestigt sein. Eine verschiebliche Befestigung erlaubt ein Einstellen der maximalen Annäherung der Schneide- oder Sägekante 67 des Bohrgehäuses 65 an die Dampfdichtung 47.

Zum Erstellen einer Kernbohrung 53 in eine Dämmschicht 51 wird der Tiefenanschlag 95 entsprechend der Dämmschichtstärke festgestellt und der Kernbohrer 63 in einer Bohrmaschine oder einem Schrauber eingespannt. Sodann wird die stumpfe Spitze 71 des Führungsstabes 69 auf die das Zentrum der Bohrung bezeichnende Stelle gesetzt und soweit in die Dämmschicht 51 gedrückt, dass die Schneide- oder Sägekante 67 des Bohrgehäuses 65 auf der Oberfläche der Dämmschicht aufsetzt. Der Kernbohrer 63 dringt unter Drehen in die Dämmschicht 51 ein, bis die stumpfe Spitze des Führungsstabes am unnachgiebigen Untergrund ansteht. Während des Bohrens liegt der Ring 83 auf der Dämmschicht 51 auf. Sollte sich der Ring 83 einseitig von der Dämmschicht abheben, muss die Richtung der Bohrung durch Schwenken der Bohrmaschine zum abgehobenen Ringteil hin so geändert werden, dass der Ring 83 wieder ringsum aufliegt. Dadurch wird in senkrechter Richtung zur Oberfläche gebohrt. Nach der Bohrung wird der Kernbohrer 63 zurückgezogen. Dabei bleibt, je nach Material der Dämmschicht 51 und dem Grad der Annäherung der Schneide- oder Sägekante 67 an die Dampfdichtung 47 der Bohrkern im Bohrgehäuse 65 und/oder in der Dämmschicht 51. Von Hand oder mit einem gabelartigen Gerät kann der Bohrkern aus der Dämmschicht 51 gehoben werden. Mit dem Schieber 75 kann der Bohrkern aus dem Bohrgehäuse 65 gestossen werden. Sollte ein nachgebender Untergrund unter der Dämmschicht 51 vorliegen, ist die genügende Einbohrtiefe auch daran ablesbar, dass der Ring 83 gegen die Dämmschicht 51 drückt.

Die Bohrkerne können gehäckselt als Stopfwolle oder Schüttgut (z.B. als Granulat) verwendet oder zur Wiederverwertung an den Lieferanten retourniert werden.

In einem Dach der beschriebenen Art können die Distanzteile aus verschiedensten Materialien hergestellt sein. Sehr gut eignen sich gestellte Rundhölzer. Sie müssen jedoch vor dem Einschrauben der kostengünstigen Sechskantkopf-Schrauben vorgebohrt werden. Um diesen Arbeitsgang zu vermeiden können teurere selbstbohrende Schrauben verwendet werden, oder ein Material für die Distanzteile verwendet werden, welches ein Einschrauben der Schrauben ohne Vorbohren erlaubt, z.B. weiche Holzfaserplatten. Es ist auch möglich im Zentrum des zylindrischen Distanzteils ein weicheres und an der Peripherie ein druckfesteres, härteres Material vorzusehen. Dies kann z.B. durch ein ausgeschäumtes Kunststoffrohr oder einen Pressspanzylinder mit unterschiedlicher Dichte erreicht werden. Zusätzlich zu den schalldämmenden Eigenschaften, welche eine über der Dampfdichtung verlegte Schalldämmung aufweist, bietet eine solche sehr zuverlässig Schutz für die Dampfdichtung vor Verletzungen während der Bauphase, weshalb die Anordnung einer Schalldämmung vorteilhaft ist.

## Patentansprüche

1. Kernbohrer (63) zur Ausführung einer Kernbohrung (53) in einer Wärmedämmschicht (51), mit einer Schneid- oder Sägekante (67) an einem Bohrgehäuse (65) und einem axial darin angeordneten stabförmigen Führungsteil (69),
- wobei das stabförmige Führungsteil (69) ein stumpfes, abgerundetes Ende (71) aufweist, welches die Schneid- oder Sägekante (67) übersteht, und
- wobei zum Ausschieben eines Bohrkerns auf dem stabförmigen Führungsteil (69) eine Schiebefläche (87) translatorisch verschiebbar gelagert ist.

2. Kernbohrer nach Anspruch 1, **dadurch gekennzeichnet, dass** ein Ring (83) ausserhalb des Bohrgehäuses (65) angeordnet und gegenüber dem Bohrgehäuses (65) translatorisch beweglich gelagert ist.

3. Kernbohrer nach Anspruch 2, **dadurch gekennzeichnet, dass** der Ring (83) und die Schiebefläche (87) zusammen eine Einheit (75) bilden.

4. Kernbohrer nach einem der Ansprüche 1 bis 3, **dadurch gekennzeichnet, dass** das antriebseitige Ende (73) des stabförmigen Führungsteils (69) als Schaft zum Einspannen in ein Bohrfutter einer Bohrmaschine ausbildet ist.

5. Kernbohrer nach einem der Ansprüche 1 bis 4, **dadurch gekennzeichnet, dass** wenigstens ein verstellbarer Anschlag (95) zur Begrenzung des Verschiebebereiches des Ringes (83), bzw. der Schiebefläche (87) vorgesehen ist.

6. Kernbohrer nach einem der Ansprüche 1 bis 5, **dadurch gekennzeichnet, dass** der untere Rand (93) des Ringes (83) auf derselben Ebene angeordnet ist wie die Schiebefläche (87).

7. Kernbohrer nach einem der Ansprüche 1 bis 6, **dadurch gekennzeichnet, dass** die Schiebefläche (87) mit einem Gleitlager (77) auf dem stabförmigen Führungsteil (69) gelagert ist.

8. Kernbohrer nach einem der Ansprüche 1 bis 7, **dadurch gekennzeichnet, dass** im Bohrgehäuse (65) drei Schlitzöffnungen (81) ausgebildet sind, und dass der Ring (83) und die Schiebefläche (87) über drei durch die Schlitzöffnungen (81) hindurchgeführte Arme (79) miteinander verbunden sind.

9. Kernbohrer nach einem der Ansprüche 1 bis 8, **dadurch gekennzeichnet, dass** das stabförmige Führungsteil (69) gegenüber dem Bohrgehäuse (65) verschieblich einstellbar ist.

## Claims

1. Core drill (63) for producing a core hole (53) in a heat insulation layer (51) with a cutting or sawing edge (67) on a drill housing (65) and a rod-shaped guide piece (69) arranged axially in the housing,
- such that the rod-shaped guide piece (69) features a blunt, rounded end (71) which protrudes over the cutting or sawing edge (67) and
- such that a sliding face (87) is mounted on the rod-shaped guide piece (69) such that it can be moved translationally for the purpose of cutting out a hole core.

2. Core drill in accordance with Patent Claim 1, **characterized such that** a ring (83) is arranged outside the drill housing (65) and is mounted such that it can be moved translationally with respect to the drill housing (65).

3. Core drill in accordance with Patent Claim 2, **characterized such that** the ring (83) and the sliding face (87) together form one unit (75).

4. Core drill in accordance with one of the Patent Claims 1 to 3, **characterized such that** the drive end (73) of the rod-shaped guide piece (69) is designed as a stem to facilitate clamping in a drill chuck of a drilling machine.

5. Core drill in accordance with one of the Patent Claims 1 to 4, **characterized such that** at least one adjustable stop (95) is provided for the purpose of limiting the travel range of the ring (83) or the sliding face (87).

6. Core drill in accordance with one of the Patent Claims 1 to 5, **characterized such that** the lower edge (93) of the ring (83) is arranged on the same level as the sliding face (87).

7. Core drill in accordance with one of the Patent Claims 1 to 6, **characterized such that** the sliding face (87) is mounted by means of a plain bearing (77) on the rod-shaped guide piece (69)

8. Core drill in accordance with one of the Patent Claims 1 to 7, **characterized such that** three slot openings (81) are formed in the drill housing (67) and that the ring (83) and the sliding face (87) are interconnected by means of three arms (79) that pass through the slot openings (81).

9. Core drill in accordance with one of the Patent Claims 1 to 8, **characterized such that** the rod-shaped guide piece (69) can be moved making it adjustable with respect to the drill housing (67).

## Revendications

1. Trépan (63) destiné à pratiquer un perçage (53) dans une couche isolante thermiquement (51), du type comportant une arête de coupe ou de sciage (67) sur un carter de forage (65) et une portion de guidage (69) en forme de barre disposée axialement dans ce carter, la portion de guidage en forme de barre (69) présentant une extrémité (71) épointée arrondie qui dépasse l'arête de coupe ou de sciage (67) et, en vue du glissement vers l'extérieur d'une carotte forée sur la portion de guidage en forme de barre (69), une surface de glissement (87) et montée coulissante en translation.

2. Trépan selon revendication 1 **caractérisé en ce que** une bague (83) est disposée à l'extérieur du carter de forage (65) et montée mobile en translation par rapport au carter de forage (65).

3. Trépan selon la revendication 2 **caractérisé en ce que** la bague (83) et la surface de glissement (87) constituent ensemble une unité.

4. Trépan selon lignes des revendications 1 à 3 **caractérisée en ce que** l'extrémité du côté entraînement (73) de la portion de guidage en forme de barre (69) est agencée en tant que fût destiné à être attelé dans une machine de forage.

5. Trépan selon l'une des revendications 1 à 4 **caractérisée en ce que** au moins une butée réglable (95) est prévue pour la limitation de l'amplitude du coulissement de la bague (83) ou de la surface de glissement (87).

6. Trépan selon l'une des revendications 1 à 5 **caractérisée en ce que** le bord inférieur (93) de la bague (83) est située dans le même plan que la surface de glissement (87).

7. Trépan selon l'une des revendications 1 à 6 **caractérisée en ce que** la surface de glissement (87) est montée avec un revêtement poli (77) sur la portion de guidage en forme de barre (69).

8. Trépan selon l'une des revendications 1 à 7 **caractérisée en ce que**, dans le carter de forage (65) sont pratiquées trois ouvertures en forme de fente (81) et **en ce que** la bague (83) et la surface de glissement (87) sont réunies ensemble par trois bras (79) traversant les ouvertures en forme de fente (81).

9. Trépan selon l'une des revendications 1 à 8, **caractérisée en ce que** la portion de guidage en forme de barre (69) est réglable par coulissement par rapport au carter de forage (65).
